# EUROPEAN PATENT SPECIFICATION

(11) **EP 4 745 503 B1**
(45) Date of publication and mention of the grant of the patent: **04.11.2026**
(21) Application number: 24213686.9
(22) Date of filing: 18.11.2024
(51) Int. Cl.: F28F 3/12, H01M 10/6568

(54) **HEAT EXCHANGER**
WÄRMETAUSCHER
ÉCHANGEUR DE CHALEUR

(43) Date of publication of application: 20.05.2026
(73) Proprietor: Valeo Electrification, 95892 Cergy Pontoise (FR)
(72) Inventor: CHAMERSKI, Artur, 32 050 Skawina (PL); SIKORA, Piotr, 32 050 Skawina (PL); POLACZEK, Dariusz, 32 050 Skawina (PL)
(74) Representative: Valeo Powertrain Systems

(56) References cited:
- EP-A1- 4 310 431
- CA-A1- 2 982 475
- US-B2- 10 801 789

## Description

### TECHNICAL FIELD

The present invention relates to a heat exchanger as defined in the preamble of claim 1, and as illustrated in CA 2 982 475A.

### BACKGROUND

A vehicle generally includes various heat exchangers such as for example, a radiator, a condenser, an evaporator and a charged air cooler. With technological shift from conventional internal combustion engine driven vehicles to electric or hybrid vehicles, there is a need for battery cooling and dedicated heat exchangers for battery cooling such as for example a battery cooler and a chiller. The battery cooler is for extracting heat from the batteries by using a cooling fluid. The chiller is for supplying cooled cooling fluid to the battery cooler. The battery cooler includes a base plate and channel plate. The channel plate is formed with multiple channels. The channel plate abuts against the base plate to define fluid flow passages between the channels and the base plate. The battery pack includes batteries that are heated during operation thereof. The battery pack is supported over the base plate of the battery cooler. The cooling fluid, for example, a first refrigerant flowing through the channels extracts heat from the batteries through the base plate to cause cooling of the batteries and the first refrigerant gets heated in the process. The heated refrigerant is supplied to the chiller to undergo heat exchange with coolant/second refrigerant flowing through the chiller to reject the heat to the coolant/second refrigerant and gets cooled in the process. The first refrigerant cooled in the chiller is supplied back to the battery cooler for extracting heat from the batteries.

With increasing environmental concern, environmentally friendly refrigerants such as R744 are preferred over other synthetic refrigerants, particularly, Hydro-fluoro-olefin based refrigerants such as R1234yf. The use of R744 exhibits several advantages such as non-toxicity, non-flammability, and inexpensive. However, the use of carbon dioxide as refrigerant face several challenges. Particularly, the elements, such as compressor and heat exchangers, such as for example, battery cooler interacting with the high-pressure carbon dioxide as refrigerant should be capable of withstanding the high pressures. Since the battery cooler is formed by joining the base plate and the channel plate to create refrigerant flow passages there-between, there are chances of refrigerant leakage due to mechanical failures such as cracks and separation of the base plate from channel plate. Particularly, the weaker sections of the battery cooler, where the connection between the base plate and the channel plate is weak or sections of the battery cooler that are subjected is high fluid pressure are prone to failure when subjected to high pressures exerted by the high-pressure refrigerant such as carbon dioxide. Further, the conventional battery coolers generally lack provision for proper positioning of the batteries over the battery cooler and provision for preventing displacement of the batteries with respect to the battery cooler. In case the batteries are displaced with respect to the battery cooler, the cooling of the batteries is adversely impacted, resulting in thermal breakdown and reducing the service life of the batteries. Further, the battery cooler is prone to bending due to laminar structure thereof, thereby reducing contact between the batteries and the battery cooler resulting in reduced thermal efficiency of the battery cooler.

Accordingly, there is a need for a plate battery cooler with the base plate and the channel plate securely held together to configure refrigerant flow passages there between. Particularly, there is a need for battery cooler that is capable of withstanding high pressure exerted by high-pressure refrigerant flowing through the fluid flow passages. Furthermore, there is a need for a battery coolant that ensures sufficient contact with the batteries being cooled to exhibit high thermal efficiency and performance. Further, there is a need for a battery cooler with provision for positioning the batteries with respect to the battery cooler and preventing displacement of the battery with respect to the battery cooler for efficient cooling of the batteries.

### SUMMARY

A heat exchanger comprising a channel plate and a pair of external plates. The channel plate formed with channels. The pair of external plates abutting opposite sides of the channel plate, assembled to sandwich the channel plate there between to form channels configured to form fluid flow passages between the channel plate and at least one of the external plates. One of the external plates adapted to support a battery pack thereon. The plate assembly forming an inlet and an outlet being in fluid communication with the channels for ingress and egress of fluid with respect to the channels. At least one of the channel plate and the pair of external plates is having variable thickness.

Further, the heat exchanger comprises a connector block formed with an inlet and an outlet being in fluid communication with the channels for ingress and egress of fluid with respect to the channels.

Furthermore, the connector block is mounted on at least one of the external plates.

Particularly, at least one of the external plates is of variable thickness along length thereof, while the channel plate thickness remains constant.

Specifically, the variable thickness is formed with a step notably on the entire cross section of the plate having the variable thickness portion.

Generally, the variable thickness is formed by a reduction of the thickness in a zone of at least one external plates facing the fluid flow passages formed by the channels.

Particularly, the pair external plates is of variable thickness along length thereof, while the channel plate thickness remains constant.

Generally, at least one of the external plates is comparatively thickener proximal to the inlet and outlet of the channels formed by the plate assembly, or proximal to the connector block than remaining portion of the external plate.

More specifically, the external plate on which the connector block is mounted is comparatively thicker proximal to the connector block than remaining portion of the external plate.

Also, one of the external plates is thicker than the other external plate.

Particularly, at least one of the external plates is secured to the channel plate by brazing.

Further, the heat exchanger is adapted to be flattened by weight of the battery pack supported thereon.

### BRIEF DESCRIPTION

Other characteristics, details and advantages of the invention can be inferred from the description of the invention hereunder. A more complete appreciation of the invention and many of the attendant advantages thereof will be readily obtained, as the same becomes better understood by reference to the following description when considered in connection with the accompanying figures, wherein:
FIG. 1 illustrates a perspective view of a battery cooler in accordance with an embodiment of the present invention.
FIG. 2 illustrates a top view of the battery cooler of the FIG. 1.
FIG. 3 illustrates an exploded view of the battery cooler of FIG. 1.
FIG. 4 illustrates a side sectional view of the battery cooler along section plane A-A' of FIG. 2, also is depicted an enlarged sectional view of a portion of the battery cooler.

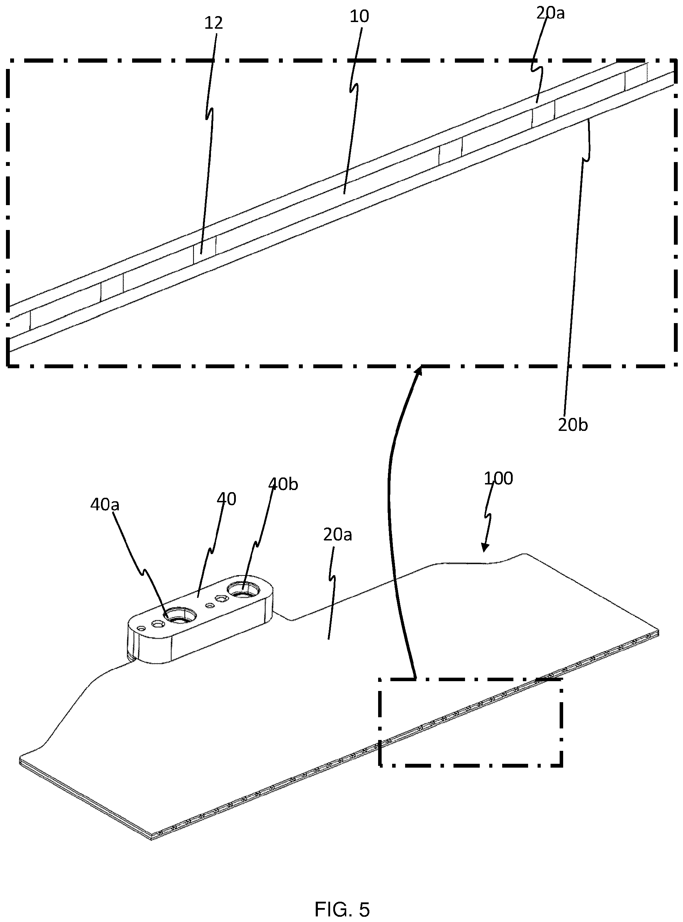

FIG. 5 illustrates another sectional view of the battery cooler along section plane B-B' of FIG. 2, also is illustrated an enlarged view depicting arrangement of a channel plate sandwiched between external plates.

### DETAILED DESCRIPTION

It must be noted that the figures disclose the invention in a detailed enough way to be implemented, the figures helping to better define the invention, if need be. The invention should however not be limited to the embodiments disclosed in the description.

In the present description, some elements or parameters may be indexed, such as a first element and a second element. In this case, unless stated otherwise, this indexation is only meant to differentiate and name elements that are similar but not identical. No idea of priority should be inferred from such indexation, as these may be switched without betraying the invention. Additionally, this indexation does not imply any order in mounting or use of the elements of the invention.

The present invention is explained with example of battery cooler for cooling batteries used to power motors of electric vehicles and resting on the battery cooler. The battery cooler comprises a channel plate sandwiched between a pair of external plates to configure fluid flow passages between the channel plate and at least one of the external plates. Such configuration of the battery cooler renders the battery cooler robust to withstand high pressure of the high- pressure refrigerants flowing through the fluid flow passages. However, the present invention is also applicable for any plate type heat exchanger applicable in vehicular and non-vehicular applications, wherein the heat exchanger is required to flexible to get flattened by weight of the heat generating component supported thereon to exhibit high thermal efficiency by maintaining sufficient contact between any heat generating component and the heat exchanger.

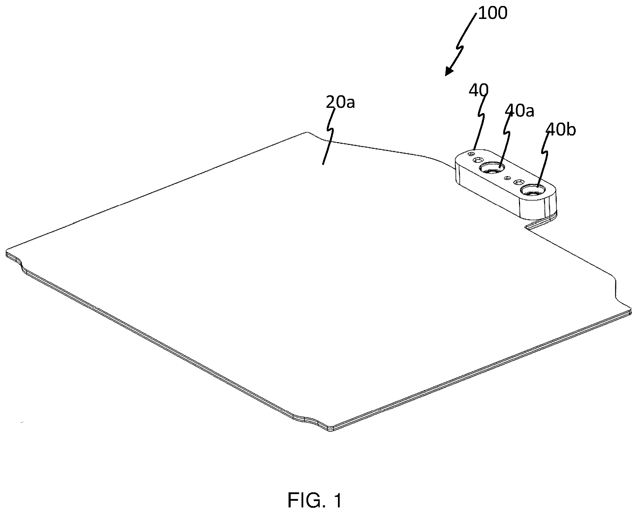

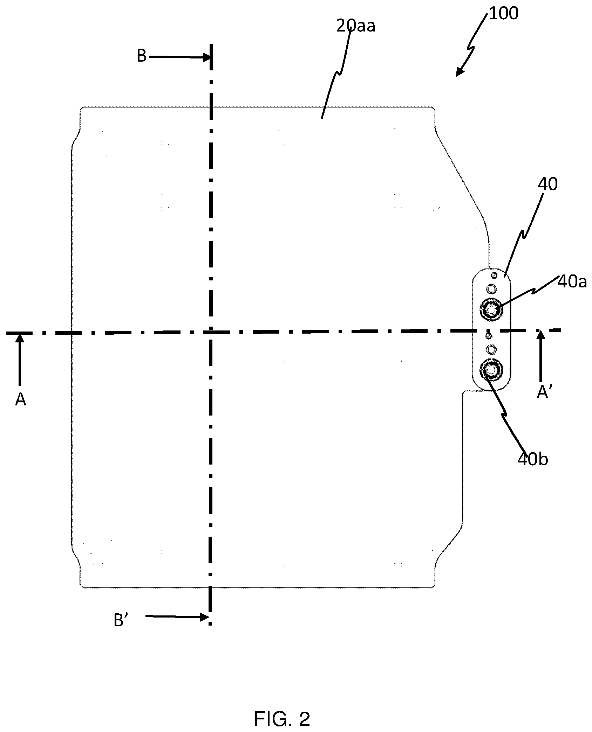

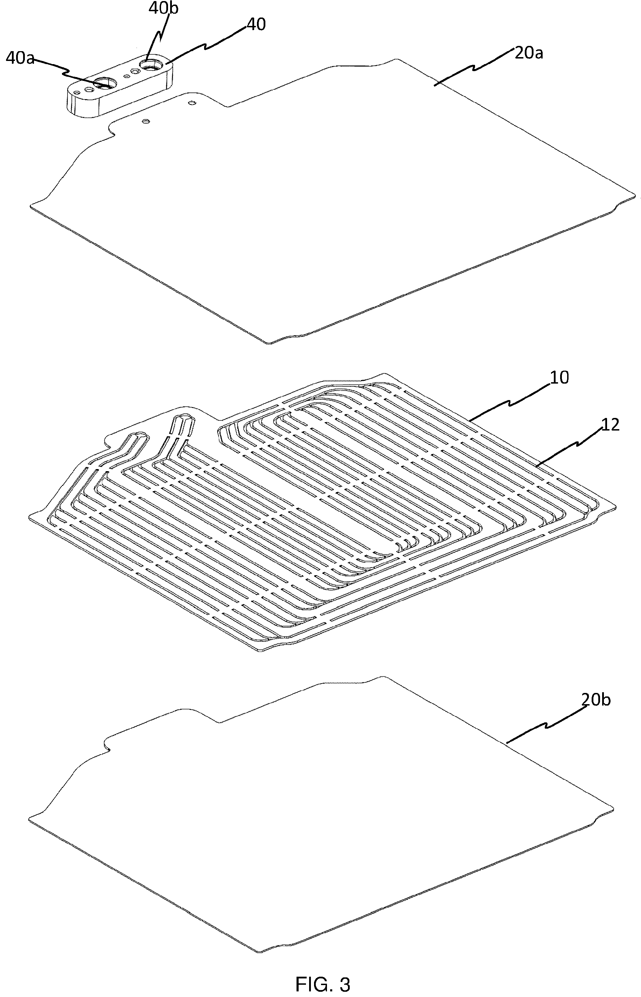

FIG. 1 illustrates a perspective view of a battery cooler 100 in accordance with an embodiment of the present invention. FIG. 2 illustrates a top view of the battery cooler 100. FIG. 3 illustrates an exploded view of the battery cooler 100. The battery cooler 100 comprises a channel plate 10 and a pair of external plates 20a and 20b.

The channel plate 10 is a laminar structure formed with channels walls, or bars, forming channels 12 once the plate is assembled with a pair of external plates 20a, 20b. The channels 12 extend along substantial portion of the channel plate 10. In accordance one embodiment of the present invention, the channels 12 are of uniform cross section. In accordance with another embodiment, the channels 12 are of variable cross section. In accordance with one embodiment, the channel plate 12 is of variable thickness. Particularly, the thickness of the channel plate 10 varies along the length of the channel plate 10. More specifically, the thickness of the channel plate 10 decreases along the length from a connector block side to a free end of the channel plate 10. In accordance with another embodiment, the channel plate 10 is having uniform thickness along length thereof. The present invention is not limited to any particular configuration of the channel plate 10. The present invention is not limited to any particular number, placement and configuration of the channels 12 on the channel plate 10 as far as the channels 12 configure fluid flow passages for flow of refrigerant there through.

The pair of external plates 20a and 20b abut opposite sides of the channel plate 10 to sandwich the channel plate 10 there between. The channel plate 10 and the pair of external plates form a plates assembly to configure fluid flow passages between the channel plate 10 and at least one of the external plates 20a, 20a. Particularly, the plates assembly configures fluid flow passages between the channel plate 10 and each of the external plates 20a, 20a. The external plates 20a and 20b are generally secured to the channel plate 10 by brazing. One of the external plates 20a, 20b is adapted to support a battery pack 30 thereon. In accordance with a preferred embodiment, a first external plate 20a abuts a first side of the channel plate 10 to support the battery pack 30, whereas a second external plate 20b abuts against a second side of the channel plate 10 opposite to the first side of the channel plate 10 to provide reinforcement to the battery cooler 100. In accordance with an embodiment, the external plates 20a and 20b are at least of same size of the channel plate 10 to cover substantial portion of the channel plate 10.

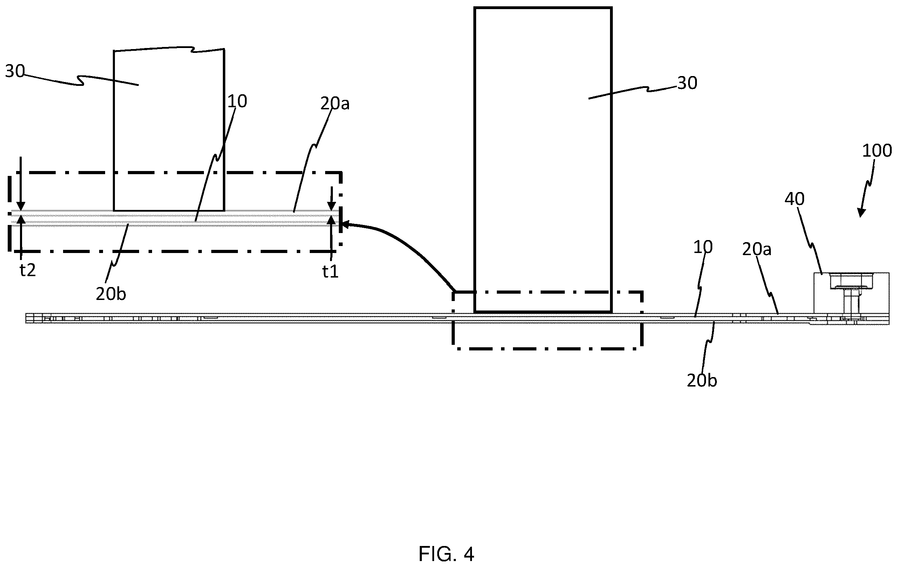

At least one of the external plates 20a, 20b is having variable thickness. Particularly, the thickness of at least one of the external plates 20a, 20b varies along the length thereof. More specifically, the thickness of at least one of the external plates 20a, 20b decreases along the length from the connector block side to a free end thereof. Referring to FIG. 4, the thickness t1 of the first external plate 20a proximal to the connector block 40 is more than the thickness t2 of the first external plate 20 away from the connector block 40. In one embodiment, the thickness of the first external plate reduces gradually along length thereof. Alternatively, the thickness of the first external plate 20a decreases abruptly to create a step at the interface between portion thicker portion and comparatively thinner portion of the first external plate 20a. The variable thickness of the external plate 20a is formed with the step notably on the entire cross section of the external plate 20a having the variable thickness portion. At least one of the external plates 20a, 20b is comparatively thickener proximal to the connector block 40 than remaining portion of the external plate 20a, 20b. The variable thickness is formed by a reduction of the thickness in a zone of at least one external plates 20a, 20b facing the fluid flow passages formed by the channels 12. The pair external plates 20a, 20b is of variable thickness along length thereof, while the channel plate 10 thickness remains constant. More specifically, the first external plate 20a on which the connector block 40 is mounted is comparatively thicker proximal to the inlet and outlet of the channels 12 formed by the plates assembly, or proximal to the connector block 40 than remaining portion of the first external plate 20a. With such configuration of the first external plate 20a, a step portion is inherently formed at interface between thicker and thinner sections of the first external plate 20a. Such step portion facilitates in proper positioning of the battery pack 30 over the battery cooler 100 and prevents displacement of the battery pack 30 with respect to the battery cooler 100 thereby ensuring that the battery pack 30 is aligned with respect to the battery cooler 100 for heat dissipation from the battery pack 30.

Also, such configuration of the external plates 20a, 20b with variable thickness imparts flexibility to the battery cooler 100. The battery cooler 100 formed by joining channel plate 10 and external plates 20 is prone to get more rigid than its two plates assembly equivalent, therefore complexifying the mounting process of such a heat exchanger with the battery cells. However, the battery cooler 100 of the present invention formed with external plates of variable thickness is flexible and gets flattened under weight of the battery pack resting thereon. With such configuration of the battery cooler 100, sufficient surface contact between the battery pack 30 and the battery cooler 100 is maintained or improved, thereby improving thermal efficiency and performance of the battery cooler 100.

In accordance with another embodiment of the present invention, at least one of the external plates 20a, 20b is having uniform thickness along length thereof. The present invention is not limited to any particular configuration of the external plates 20a and 20b as far as the external plates 20a, 20b sandwich the channel plate 10, wherein one of the external plate 20a supports the heat exchanger while other of the external plates 20b provides reinforcement to the battery cooler 100.

Further, the battery cooler 100 comprises a connector block 40 formed with an inlet 40a and an outlet 40b being in fluid communication with the channels 12 for ingress and egress of fluid with respect to the channels 12. The connector block 40 is mounted on at least one of the external plates 20a, 20b. In accordance with one embodiment, the connector block is mounted on the external plate 20a. The connector block 40 is arranged along one of the lateral sides of the external plate 30a. However, the present invention is not limited to any particular placement and configuration of the connector block 40 as far as the connector block 40 is adapted to supply and collect heat exchange fluid with respect to the fluid flow passages formed by the channels 12 of the channel plate 10.

In accordance with an embodiment of the present invention, one of the external plates 20a, 20b is thicker than the other external plate 20a, 20b. Particularly, the second external plate 20b is thicker than the first external plate 20a to further reinforce the battery cooler 100.

In any case, the invention cannot and should not be limited to the embodiments specifically described in this document, as other embodiments might exist. The invention shall spread to any equivalent means and any technically operating combination of means.

### REFERENCE NUMERAL LIST

- 100:: a heat exchanger, battery cooler
- 10:: channel plate
- 20a:: first external plate
- 20b:: second external plate
- 30:: battery pack
- 40:: connector block
- 40a:: inlet of the connector block
- 40b:: outlet of the connector block

## Claims

1. A heat exchanger (100) for an electronic component liable to produce heat, comprising:
• a channel plate (10) ;
• a pair of external plates (20a) and (20b) abutting opposite sides of the channel plate (10), assembled to sandwich the channel plate (10) there between to form channels configured to form fluid flow passages between the channel plate (10) and at least one of the external plates (20a, 20b), one of the external plates (20a, 20b) adapted to support a battery pack (30) thereon; the plates assembly forming an inlet and an outlet being in fluid communication with the channels (12) for ingress and egress of fluid with respect to the channels (12),
**characterized in that** at least one of the channel plate (10) and the pair of external plates (20a) and (20b) is having variable thickness.

2. The heat exchanger (100) as claimed in the previous claim further comprises a connector block (40) formed with an inlet (40a) and an outlet (40b) being in fluid communication with the channels (12) for ingress and egress of fluid with respect to the channels (12).

3. The heat exchanger (100) as claimed in any of the preceding claims, wherein at least one of the external plates (20a, 20b) is of variable thickness along length thereof, while the channel plate (10) thickness remains constant.

4. The heat exchanger (100) as claimed in any of the previous claim, wherein the variable thickness is formed with a step notably on the entire cross section of the plate having the variable thickness portion.

5. The heat exchanger (100) as claimed in claim 1 to 4, wherein the variable thickness is formed by a reduction of the thickness in a zone of at least one external plates (20a, 20b) facing the fluid flow passages formed by the channels (12).

6. The heat exchanger (100) as claimed in any of the preceding claims, wherein the pair external plates (20a, 20b) is of variable thickness along length thereof, while the channel plate thickness remains constant.

7. The heat exchanger (100) as claimed in the previous claim, wherein at least one of the external plates (20) is comparatively thicker proximal to the inlet and outlet of the channels formed by the plates assembly, or proximal to the connector block (40) than remaining portion of the external plate (20a, 20b).

8. The heat exchanger (100) as claimed in the previous claim, wherein the external plate (20a, 20b) on which the connector block (40) is mounted is comparatively thicker proximal to the connector block (40) than remaining portion of the external plate (20a, 20b).

9. The heat exchanger (100) as claimed in any of the preceding claims, wherein one of the external plates (20a, 20b) is thicker than the other external plate (20a, 20b).

10. The heat exchanger (100) as claimed in any of the preceding claims, wherein at least one of the external plates (20a, 20b) is secured to the channel plate (10) by brazing.

## Patentansprüche

1. Wärmetauscher (100) für ein elektronisches Bauteil, das zur Wärmeerzeugung neigt, umfassend:
- eine Kanalplatte (10);
- ein Paar Außenplatten (20a) und (20b), die an gegenüberliegenden Seiten der Kanalplatte (10) anliegen und so zusammengebaut sind, dass sie die Kanalplatte (10) dazwischen einschließen, um Kanäle zu bilden, die so konfiguriert sind, dass sie Fluidströmungsdurchgänge zwischen der Kanalplatte (10) und mindestens einer der Außenplatten (20a, 20b) bilden, wobei eine der Außenplatten (20a, 20b) dazu geeignet ist, ein Batteriepaket (30) darauf zu tragen; wobei die Plattenbaugruppe einen Einlass und einen Auslass bildet, die in Fluidverbindung mit den Kanälen (12) für den Ein- und Austritt von Fluid in Bezug auf die Kanäle (12) stehen, **dadurch gekennzeichnet, dass** mindestens eine der Kanalplatte (10) und des Paares Außenplatten (20a) und (20b) eine variable Dicke aufweist.

2. Der Wärmetauscher (100) gemäß dem vorherigen Anspruch umfasst ferner einen Anschlussblock (40), der mit einem Einlass (40a) und einem Auslass (40b) ausgebildet ist, die in Fluidverbindung mit den Kanälen (12) für den Ein- und Austritt von Fluid in Bezug auf die Kanäle (12) stehen.

3. Der Wärmetauscher (100) gemäß einem der vorhergehenden Ansprüche, wobei mindestens eine der Außenplatten (20a, 20b) über ihre Länge eine variable Dicke aufweist, während die Dicke der Kanalplatte (10) konstant bleibt.

4. Der Wärmetauscher (100) gemäß einem der vorherigen Ansprüche, wobei die variable Dicke mit einer Stufe gebildet wird, insbesondere über den gesamten Querschnitt der Platte mit dem Abschnitt variabler Dicke.

5. Der Wärmetauscher (100) gemäß den Ansprüchen 1 bis 4, wobei die variable Dicke durch eine Verringerung der Dicke in einem Bereich mindestens einer Außenplatte (20a, 20b) gebildet wird, der den durch die Kanäle (12) gebildeten Fluidströmungsdurchgängen zugewandt ist.

6. Der Wärmetauscher (100) gemäß einem der vorhergehenden Ansprüche, wobei das Paar Außenplatten (20a, 20b) über ihre Länge eine variable Dicke aufweist, während die Dicke der Kanalplatte konstant bleibt.

7. Der Wärmetauscher (100) gemäß dem vorherigen Anspruch, wobei mindestens eine der Außenplatten (20) in der Nähe des Einlasses und Auslasses der durch die Plattenbaugruppe gebildeten Kanäle oder in der Nähe des Anschlussblocks (40) vergleichsweise dicker ist als der verbleibende Teil der Außenplatte (20a, 20b).

8. Der Wärmetauscher (100) gemäß dem vorherigen Anspruch, wobei die Außenplatte (20a, 20b), auf der der Anschlussblock (40) montiert ist, in der Nähe des Anschlussblocks (40) vergleichsweise dicker ist als der verbleibende Teil der Außenplatte (20a, 20b).

9. Der Wärmetauscher (100) gemäß einem der vorhergehenden Ansprüche, wobei eine der Außenplatten (20a, 20b) dicker ist als die andere Außenplatte (20a, 20b).

10. Der Wärmetauscher (100) gemäß einem der vorhergehenden Ansprüche, wobei mindestens eine der Außenplatten (20a, 20b) durch Hartlöten an der Kanalplatte (10) befestigt ist.

## Revendications

1. Un échangeur de chaleur (100) pour un composant électronique susceptible de produire de la chaleur, comprenant :
- une plaque de canaux (10) ;
- une paire de plaques externes (20a) et (20b) en appui sur les côtés opposés de la plaque de canaux (10), assemblées pour prendre en sandwich la plaque de canaux (10) entre elles afin de former des canaux configurés pour former des passages d'écoulement de fluide entre la plaque de canaux (10) et au moins l'une des plaques externes (20a, 20b), l'une des plaques externes (20a, 20b) étant adaptée pour supporter un bloc-batterie (30) sur celle-ci ; l'assemblage de plaques formant une entrée et une sortie étant en communication fluidique avec les canaux (12) pour l'entrée et la sortie du fluide par rapport aux canaux (12), **caractérisé en ce qu'**au moins l'une de la plaque de canaux (10) et de la paire de plaques externes (20a) et (20b) présente une épaisseur variable.

2. L'échangeur de chaleur (100) selon la revendication précédente comprend en outre un bloc connecteur (40) formé avec une entrée (40a) et une sortie (40b) étant en communication fluidique avec les canaux (12) pour l'entrée et la sortie du fluide par rapport aux canaux (12).

3. L'échangeur de chaleur (100) selon l'une quelconque des revendications précédentes, dans lequel au moins l'une des plaques externes (20a, 20b) présente une épaisseur variable sur sa longueur, tandis que l'épaisseur de la plaque de canaux (10) reste constante.

4. L'échangeur de chaleur (100) selon l'une quelconque des revendications précédentes, dans lequel l'épaisseur variable est formée avec un gradin notamment sur toute la section transversale de la plaque présentant la portion d'épaisseur variable.

5. L'échangeur de chaleur (100) selon les revendications 1 à 4, dans lequel l'épaisseur variable est formée par une réduction de l'épaisseur dans une zone d'au moins l'une des plaques externes (20a, 20b) faisant face aux passages d'écoulement de fluide formés par les canaux (12).

6. L'échangeur de chaleur (100) selon l'une quelconque des revendications précédentes, dans lequel la paire de plaques externes (20a, 20b) présente une épaisseur variable sur sa longueur, tandis que l'épaisseur de la plaque de canaux reste constante.

7. L'échangeur de chaleur (100) selon la revendication précédente, dans lequel au moins l'une des plaques externes (20) est comparativement plus épaisse à proximité de l'entrée et de la sortie des canaux formés par l'assemblage de plaques, ou à proximité du bloc connecteur (40) que la partie restante de la plaque externe (20a, 20b).

8. L'échangeur de chaleur (100) selon la revendication précédente, dans lequel la plaque externe (20a, 20b) sur laquelle le bloc connecteur (40) est monté est comparativement plus épaisse à proximité du bloc connecteur (40) que la partie restante de la plaque externe (20a, 20b).

9. L'échangeur de chaleur (100) selon l'une quelconque des revendications précédentes, dans lequel l'une des plaques externes (20a, 20b) est plus épaisse que l'autre plaque externe (20a, 20b).

10. L'échangeur de chaleur (100) selon l'une quelconque des revendications précédentes, dans lequel au moins l'une des plaques externes (20a, 20b) est fixée à la plaque de canaux (10) par brasage.
